# EUROPÄISCHE PATENTANMELDUNG

(11) **EP 3 214 590 A1**
(43) Veröffentlichungstag der Anmeldung: **06.09.2017**
(21) Anmeldenummer: 16158164.0
(22) Anmeldetag: 02.03.2016
(51) Int. Cl.: G06Q 10/08

(54) **VERFAHREN ZUR ERSTELLUNG EINER BESCHREIBUNG EINES GEPÄCKSTÜCKS UND GEPÄCKBESCHREIBUNGSSYSTEM**

(71) Anmelder: Siemens Aktiengesellschaft, 80333 München (DE)
(72) Erfinder: HOHLWEGLER, Jürgen, 78479 Allensbach (DE); MUECK, Bengt, 32760 Detmold (DE); PASHOV, Ilian, 78467 Konstanz (DE); ROTTLAND, Jörg, 78315 Radolfzell (DE); HAGER, Gerhard, 91096 Möhrendorf (DE)
(74) Vertreter: Maier, Daniel Oliver

(57) **Zusammenfassung**

Die Erfindung betrifft ein Verfahren zur Erstellung einer Beschreibung eines Gepäckstücks (18). Um mehrere Merkmale des Gepäckstücks (18) zu erfassen, wird vorgeschlagen, dass das Gepäckstück (18) mittels einer visuellen Erfassungseinrichtung (4) erfasst wird, mittels welcher ein Gepäckstückabbild erzeugt wird, wobei aus dem Gepäckstückabbild visuelle Merkmale (20) des Gepäckstücks (18) extrahiert werden und aus den extrahierten visuellen Merkmalen (20) des Gepäckstücks (18) eine Gepäckstückbeschreibung erstellt wird.

## Beschreibung

Die Erfindung betrifft ein Verfahren zur Erstellung einer Beschreibung eines Gepäckstücks.

Bei Flugreisen wird ein aufgegebenes Gepäckstück üblicherweise mit einem Gepäcketikett versehen, um das Gepäckstück im Laufe des Transports sortieren bzw. (z. B. einer Transport- und/oder einer Eigentümerinformation) zuordnen zu können. Üblicherweise wird im Verlauf des Transports der Barcode ausgelesen, um die Sortierung/Zuordnung vornehmen zu können. Mit dem Barcode ist die Gepäcknummer codiert, für welche wiederum die Flugnummer und weitere Transportinformationen hinterlegt sind.

Oftmals wird ein Gepäcketikett beim Transport des Gepäckstücks (beispielsweise beim Transport über Gepäckbänder bzw. Förderbänder, beim Beladen des Flugzeugs und/oder beim Entladen des Flugzeugs) beschädigt. Es kann sogar dazu kommen, dass ein Gepäcketikett eines Gepäckstücks verloren geht. In diesen Fällen ist eine Zuordnung des Gepäckstücks sehr aufwändig, kostet Zeit und es entsteht ein erhöhter Personalaufwand. Insbesondere wenn das Gepäcketikett verloren geht, muss von Hand versucht werden, z. B. durch Namensschildchen am Gepäckstück, Hinweise auf den Eigentümer des Gepäckstücks zu erhalten.

Es ist eine Aufgabe der vorliegenden Erfindung, ein Verfahren anzugeben, mit dem mehrere Merkmale des Gepäckstücks erfasst werden können, sodass eine Zuordnung des Gepäckstücks effizienter gestaltet werden kann.

Diese Aufgabe wird erfindungsgemäß durch ein Verfahren zur Erstellung einer Beschreibung eines Gepäckstücks gelöst, bei dem das Gepäckstück mittels zumindest einer visuellen Erfassungseinrichtung, gegebenenfalls auch mittels mehrerer Erfassungseinrichtungen, erfasst wird, mittels welcher zumindest ein Gepäckstückabbild bzw. im Falle mehrere Erfassungseinrichtungen mehrere Gepäckstückabbilder erzeugt wird bzw. werden, wobei aus dem zumindest einen Gepäckstückabbild bzw. den mehreren Gepäckstückabbildern visuelle Merkmale des Gepäckstücks extrahiert werden und aus den extrahierten visuellen Merkmalen des Gepäckstücks eine Gepäckstückbeschreibung erstellt wird.

Die Erfindung geht von der Überlegung aus, dass die Erfassung des Gepäckstücks und die Erstellung der Gepäckstückbeschreibung eine effiziente Möglichkeit, insbesondere eine schnelle und Personal sparende Möglichkeit, darstellt, das Gepäckstück zu beschreiben. Weiter ergibt sich damit die Möglichkeit, das Gepäckstück effizient, insbesondere schnell und Personal sparend, zuordnen und/oder sortieren zu können.

Insbesondere wird das Gepäckstück mittels der - zumindest einen - visuellen Erfassungseinrichtung visuell erfasst. Das Gepäckstück kann beispielsweise ein Koffer, eine Reisetasche, ein Sperrgepäckstück, ein Sportgerät oder ein sonstiges Gepäckstück sein.

Vorzugsweise umfasst das - zumindest eine - Gepäckstückabbild zumindest einen Teilausschnitt des Gepäckstücks. Das Gepäckstückabbild kann in Form eines Pixelbildes, eines Rasterbildes und/oder ähnlichem erzeugt werden. Weiter kann das Gepäckstückabbild ein 2D-Abbild, 3D-Abbild und/oder ein transformiertes Abbild sein.

Als "extrahieren" von visuellen Merkmalen des Gepäckstücks aus dem Gepäckstückabbild kann verstanden werden, dass die visuellen Merkmale aus dem Gepäckstückabbild gewonnen werden.

Beispielsweise können visuelle Merkmale des Gepäckstücks durch eine Auswertung und/oder eine Analyse des zumindest einen Gepäckstückabbildes oder der mehreren Gepäckstückabbildern gewonnen werden.

So kann beispielsweise ein Abmaß (bzw. Größe) des Gepäckstücks zweckmäßiger Weise durch eine Kombination von mehreren Gepäckstückabbildern von mehreren visuellen Erfassungseinrichtungen, beispielsweise mehreren Kameras, ermittelt werden.

Hierbei ist es insbesondere zweckmäßig, wenn eine exakte Position jeder der mehreren visuellen Erfassungseinrichtungen bzw. jeder Kamera bekannt ist. D.h., es handelt sich um "ortsfeste" visuelle Erfassungseinrichtungen, beispielsweise ortsfeste Kameras.

Zusätzliche Informationen, wie solche über eine Brennweite eines Objektivs der visuellen Erfassungseinrichtung und Pixelabstände von Sensoren sind weiter hier, d.h. zur Extraktion von visuellen Merkmalen bzw. des Abmasses, auch zweckmäßig, lässt sich daraus - ähnlich wie bei einer Stereo-Kamera - ein Objekt-/Gepäckstückabmaß bzw. -größe "schätzen".

Sofern die mehreren Gepäckstückabbilder nur Teilausschnitte des Gepäckstücks zeigen, sind eine Transportgeschwindigkeit des Gepäckstückes und Bildaufnahmefrequenzen der mehreren visuellen Erfassungseinrichtungen bzw. Kameras weitere zweckmäßige Informationen, die zur Bestimmung zur Extraktion von visuellen Merkmalen bzw. des Abmasses herangezogen werden können.

Bei zumindest einem Gepäckstückabbild von der zumindest einen visuellen Erfassungseinrichtung, beispielsweise einer einzelnen Handkamera, kann die Bestimmung des Abmasses bzw. der Größe des Gepäckstücks anhand von Abmassen bzw. Größen von bekannten Objekten im zumindest einen Gepäckstück geschätzt werden, z.B. ein Gepäcklabel ist ca. 50mm breit - und ermöglicht so Aufschluss über das Abmaß bzw. die Größe des Gepäckstücks.

Weiter kann die Gepäckstückbeschreibung erstellt werden, indem die extrahierten visuellen Merkmale des Gepäckstücks zusammengefasst werden. Die Gepäckstückbeschreibung kann eine beliebige Form aufweisen, z. B. kann die Gepäckstückbeschreibung in Form eines Vektors oder in Form eines beschreibenden Textes erstellt werden.

Zweckmäßigerweise wird das Gepäckstückabbild mittels der visuellen Erfassungseinrichtung automatisch erfasst. Insbesondere kann die visuelle Erfassung zumindest teilautomatisch erfolgen. In diesem Fall fokussiert die visuelle Erfassungseinrichtung von sich aus das Gepäckstück und/oder löst die Erfassung von sich aus aus. Bei einer teilautomatischen Erfassung kann ein Teilschritt der Erfassung anderweitig als von der Erfassungseinrichtung selbst ausgeführt werden, beispielsweise von einer handelnden Person.

In einer vorteilhaften Ausgestaltung der Erfindung ist die visuelle Erfassungseinrichtung eine Handerfassungseinrichtung, insbesondere eine Handkamera und/oder ein Handscanner. Weiter kann die visuelle Erfassungseinrichtung eine Handlaserkamera und/oder ein Handlaserscanner sein. In dem Fall, dass die visuelle Erfassungseinrichtung eine Handerfassungseinrichtung ist, wird sinnvollerweise ein Teilschritt der Erfassung, z. B. das Positionieren der Handerfassungseinrichtung, von einer handelnden Person ausgeführt.

Ferner kann das Gepäckstückabbild mittels der visuellen Erfassungseinrichtung vollautomatisch erfasst werden, insbesondere ohne manuelles Einwirken einer Person. Beispielsweise kann die visuelle Erfassungseinrichtung eine vollautomatische Kamera und/oder ein vollautomatischer Scanner sein.

Weiter kann das Gepäckstückabbild automatisch erzeugt werden, insbesondere mittels der visuellen Erfassungseinrichtung. Ferner können die visuellen Merkmale des Gepäckstücks automatisch aus dem Gepäckstückabbild extrahiert werden, insbesondere mittels einer Datenverarbeitungseinheit. Außerdem kann die Gepäckstückbeschreibung automatisch aus den extrahierten visuellen Merkmalen des Gepäckstücks erstellt werden, insbesondere mittels der Datenverarbeitungseinheit.

Zweckmäßigerweise ist die Datenverarbeitungseinheit dazu eingerichtet, beispielsweise durch ein entsprechendes lauffähiges Computerprogramm, welches auf der Datenverarbeitungseinheit abläuft, die visuellen Merkmale des Gepäckstücks aus dem Gepäckstückabbild zu extrahieren und/oder die Gepäckstückbeschreibung aus den extrahierten visuellen Merkmalen des Gepäckstücks zu erstellen.

Die Erfindung und/oder die beschriebenen Weiterbildungen können - zumindest teilweise - sowohl in Software als auch in Hardware, beispielsweise unter Verwendung einer speziellen elektrischen Schaltung, realisiert werden.

Ferner ist eine Realisierung der Erfindung und/oder einer beschriebenen Weiterbildung - zumindest teilweise - möglich durch ein computerlesbares Speichermedium, auf welchem das Computerprogramm gespeichert ist, welches die Erfindung oder die Weiterbildung - zumindest teilweise - ausführt.

Auch können die Erfindung und/oder die beschriebenen Weiterbildungen - zumindest teilweise - durch ein Computerprogrammerzeugnis realisiert sein, welches ein Speichermedium aufweist, auf welchem das Computerprogramm gespeichert ist, welches die Erfindung und/oder die Weiterbildungen - zumindest teilweise - ausführt.

Die visuellen Merkmale des Gepäckstücks können ein Gepäckstückabmaß, eine Gepäckstückform, eine Gepäckstückfarbe, eine Gepäckstückmusterung, ein Gepäckstücklogo und/oder einen Gepäckstückmarkennamen umfassen. Das Gepäckstückabmaß kann eine Länge des Gepäckstücks, eine Breite des Gepäckstücks und/oder eine Höhe des Gepäckstücks umfassen. Weiter kann das Gepäckstücklogo z. B. ein Emblem eines Gepäckstückherstellers, eine Bildmarke des Gepäckstückherstellers und/oder ein Designelement des Gepäckstückherstellers umfassen.

Zweckmäßigerweise wird die Gepäckstückbeschreibung in Form eines Beschreibungsvektors erstellt. Weiter kann der Beschreibungsvektor eindimensional oder mehrdimensional sein. Vorzugsweise umfasst der Beschreibungsvektor mehrere Vektorfelder. Außerdem kann jedes Vektorfeld ein visuelles Merkmal umfassen, insbesondere in Form von Text und/oder Ziffern.

Ferner kann die Gepäckstückbeschreibung in Form eines beschreibenden Textes erstellt werden.

An dem Gepäckstück kann ein Zusatzelement angeordnet sein. Das Zusatzelement kann z. B. ein Identifikationselement sein. Weiter kann das Zusatzelement z. B. ein Gepäcketikett, auch Baggage Label oder Banderole genannt, einen Aufkleber und/oder einen Anhänger umfassen. Der Anhänger kann beispielsweise ein Anhänger einer Fluggesellschaft, ein Anhänger eines Flughafens und/oder ein persönlicher Anhänger sein. Vorzugsweise ist das Zusatzelement lösbar mit dem Gepäckstück verbunden. Außerdem kann das Zusatzelement vom Gepäckstück entfernbar sein.

In einer bevorzugten Ausgestaltung der Erfindung wird das an dem Gepäckstück angeordnete Zusatzelement mittels der visuellen Erfassungseinrichtung erfasst. Zweckmäßigerweise wird mittels der Erfassungseinrichtung ein Zusatzabbild erzeugt. Aus dem Zusatzabbild können visuelle Merkmale des Zusatzelementes extrahiert werden. Weiter kann aus den extrahierten visuellen Merkmalen des Zusatzelementes eine Zusatzbeschreibung erstellt werden. Zweckmäßigerweise bildet die Zusatzbeschreibung gemeinsam mit der Gepäckstückbeschreibung eine erweiterte Gepäckstückbeschreibung. Auf diese Weise wird aus den extrahierten visuellen Merkmalen des Zusatzelementes sowie aus den extrahierten Merkmalen des Gepäckstücks eine erweitere Gepäckstückbeschreibung erstellt.

Das Gepäckstückabbild und das Zusatzabbild können je ein Teilbereich eines gemeinsamen Abbildes sein. Alternativ können das Gepäckstückabbild und das Zusatzabbild jeweils zumindest ein Teilbereich in unterschiedlichen Abbildern sein.

Die visuelle Merkmale des Zusatzelements können eine Form des Zusatzelements, eine Farbe des Zusatzelements, eine Musterung des Zusatzelements, ein Abmaß des Zusatzelements und/oder ein Logo des Zusatzelements umfassen. Das Abmaß des Zusatzelements kann eine Länge des Zusatzelements, eine Breite des Zusatzelements und/oder eine Höhe des Zusatzelements umfassen. Weiter kann das Logo des Zusatzelements z. B. ein Emblem, eine Bildmarke und/oder ein Designelement umfassen.

Das Gepäckstück kann ein Zusatzelement mit einem Informationssatz in Form von Klartext aufweisen. Das Zusatzelement kann das zuvor genannte Zusatzelement sein. Vorzugsweise wird bei der visuellen Erfassung der Informationssatz zumindest teilweise visuell erfasst. Weiter kann zumindest ein Teil des Informationssatzes mittels einer optischen Texterkennung, insbesondere mittels OCR ("optical character recognition"), erkannt werden.

Der erkannte Teil des Informationssatzes kann beispielsweise als Informationssatzbeschreibung gespeichert werden. Weiter kann der erkannte Teil des Informationssatzes (z. B. als Informationssatzbeschreibung) in der erweiterten Gepäckstückbeschreibung und/oder zusätzlich zu der erweiterten Gepäckstückbeschreibung gespeichert werden.

Vorzugsweise umfasst der Informationssatz zusätzliche Informationen, wie z. B. Transport- und/oder Eigentümerinformationen. Beispielsweise kann der Informationssatz eine Gepäcknummer, einen Eigentümernamen, auch Passagiernamen genannt, eine Flugnummer, ein Zwischenflughafenkürzel und/oder ein Zielflughafenkürzel, insbesondere als Transport- und/oder Eigentümerinformationen, umfassen. Weiter kann der Informationssatz Verarbeitungsinformationen umfassen. Insbesondere können Verarbeitungsinformationen Verarbeitungsanweisungen sein, wie z. B. "kurze Anschlusszeit" ("short connection time"), "vorrangige Behandlung" ("handle with priority") und/oder "Vorsicht Bruchgefahr" ("handle with care FRAGILE"). Weiter können Verarbeitungsinformationen Sicherheitsinformationen umfassen.

Zweckmäßigerweise wird das Gepäckstück unter Verwendung des erkannten Teils des Informationssatzes automatisch sortiert. Auf diese Weise wird der erkannte Teil des Informationssatzes automatisch bei der Sortierung berücksichtigt.

Als "Gepäck sortieren" kann "Gepäck zuordnen" aufgefasst werden. Insbesondere kann bei der Sortierung einem Gepäckstück eine Transport-, Eigentümer- und/oder Verarbeitungsinformation zugeordnet werden. Weiter kann "Gepäck sortieren" z. B. einen oder mehrere Transportschritt(e) des Gepäckstücks entsprechend der Zuordnung beinhalten.

Vorzugsweise erfolgt die Sortierung in einem Flughafen. Indem ein Teil des Informationssatz erkannt wird, kann beispielsweise dem Gepäckstück ein Zielort zugeordnet werden, zu welchem das Gepäckstück transportiert werden soll. Dabei kann der Zielort beispielsweise ein bestimmtes Gate, eine bestimmte Ladezone, ein bestimmtes Flugzeug, ein bestimmtes Gepäcktransportmittel (insbesondere ein bestimmtes Gepäckband), ein Zielflughafen, ein Gepäckausgabeband an einem Zielflughafen oder ähnliches sein.

Indem ein Teil des Informationssatzes erkannt wird, kann beispielsweise das Gepäckstück eine spezielle Sortierstrecke nehmen. Beispielsweise kann das Gepäckstück eine Sortierstrecke nehmen, bei der das Gepäckstück schneller an den Zielort transportiert wird und/oder bei der das Gepäckstück im Wesentlichen keinen Erschütterungen ausgesetzt ist.

Vorteilhafterweise erfolgt die Extraktion von visuellen Merkmalen, insbesondere von visuellen Merkmalen des Gepäckstücks und/oder von visuellen Merkmalen des Zusatzelementes, unter Verwendung von Vorwissen und/oder unter Verwendung von trainierbaren Systemen.

Beispielsweise kann die Datenverarbeitungseinheit typische Layouts, d. h. typische visuelle Merkmale, von Zusatzelementen, insbesondere von Gepäcketiketten, erlernen und/oder als Vorwissen eingespeichert bekommen. Auf diese Weise kann von erkannten und/oder extrahierten visuellen Merkmalen des Zusatzelements auf weitere Informationen, wie Transport- und/oder Verarbeitungsinformationen, geschlossen werden. Beispielsweise kann durch bestimmte visuelle Merkmale des Zusatzelements auf eine bestimmte Fluggesellschaft geschlossen werden. Auf diese Weise wird eine Sortierung/Zuordnung ermöglicht und/oder verbessert.

Zweckmäßigerweise wird die bei einer visuellen Erfassung des Gepäckstücks erstellte Gepäckstückbeschreibung (bzw. erweiterte Gepäckstückbeschreibung) als Vergleichsbeschreibung gespeichert. Beispielsweise kann die Vergleichsbeschreibung bei einer Abgabe des Gepäckstücks und/oder einem Check-In gespeichert werden. Vorzugsweise wird die Vergleichsbeschreibung in einer Datenbank gespeichert. Insbesondere kann die Vergleichsbeschreibung in einem Datensatz gespeichert werden. Der Datensatz kann - neben der Vergleichsbeschreibung - weitere Informationen aufweisen, wie Transport-, Eigentümer- und/oder Verarbeitungsinformationen. Insbesondere kann der Datensatz - neben der Vergleichsbeschreibung - eine Gepäcknummer, einen Eigentümernamen, eine Flugnummer, ein Zwischenflughafenkürzel bzw. -namen, einen Zielflughafenkürzel bzw. - namen und/oder einen Zielort als weitere Informationen umfassen.

Weiter gibt es die Möglichkeit, die Vergleichsbeschreibung anonym zu halten bzw. zu anonymisieren, welche dann zweckmäßigerweise keine Eigentümerinformationen, insbesondere keinen Eigentümernamen, umfasst.

Vorteilhafterweise erfolgt die Speicherung der Vergleichsbeschreibung bzw. des Datensatzes automatisch. Weiter kann die Vergleichsbeschreibung bzw. der Datensatz zeitlich begrenzt gespeichert werden.

Weiter kann die Gepäckstückbeschreibung (bzw. die erweiterte Gepäckstückbeschreibung), insbesondere als Vergleichsbeschreibung, zur Verfügung gestellt werden, insbesondere an beliebigen Orten ("Wo"), zu beliebigen Zeiten ("Wann"), für beliebige Personen ("Für wen") und für beliebige Zwecke ("Wofür") .

Das Gepäckstück kann ein Fluggepäckstück sein. Vorzugsweise wird die Vergleichsbeschreibung weiteren oder auch allen am Transport des Gepäckstücks beteiligen Flughäfen zur Verfügung gestellt. Die am Transport des Gepäckstücks beteiligen Flughäfen können z. B. ein Startflughafen, ein Zwischenflughafen und/oder ein Zielflughafen des Gepäckstücks sein. Insbesondere wird der Datensatz, in welcher die Vergleichsbeschreibung gespeichert ist, allen am Transport des Gepäckstücks beteiligen Flughäfen zur Verfügung gestellt. Auf diese Weise können alle am Transport des Gepäckstücks beteiligten Flughäfen auf die Vergleichsbeschreibung bzw. auf den Datensatz zugreifen. Beispielsweise kann die Vergleichsbeschreibung an alle am Transport des Gepäckstücks beteiligen Flughäfen übermittelt werden. Z. B. kann die Vergleichsbeschreibung bzw. der Datensatz lokal in einer jeweiligen Datenbank des jeweiligen Flughafens gespeichert werden. Weiter kann die Vergleichsbeschreibung bzw. der Datensatz in einer verteilten Datenbank gespeichert sein, auf welche die beteiligten Flughäfen Zugriff haben.

Da die Gepäckbeschreibung aus den extrahierten visuellen Merkmalen des Gepäckstücks erstellt wird, ist die Gepäckstückbeschreibung zweckmäßigerweise spezifisch für das Gepäckstück.

In einer bevorzugten Ausgestaltung der Erfindung wird das Verfahren bei einer Prüfung eingesetzt. Vorteilhafterweise wird bei der Prüfung geprüft, ob die Gepäckstückbeschreibung (bzw. die erweitere Gepäckstückbeschreibung) mit einer Vergleichsbeschreibung übereinstimmt. Die Vergleichsbeschreibung kann die zuvor genannte Vergleichsbeschreibung sein. Weiter kann die Vergleichsbeschreibung eine andere in der Datenbank gespeicherte Vergleichsbeschreibung sein.

Zweckmäßigerweise wird die Prüfung zu einem späteren Zeitpunkt durchgeführt als die Speicherung der Vergleichsbeschreibung. Die Vergleichsbeschreibung kann bei einer ersten Erfassung des Gepäckstücks mittels der visuellen Erfassungseinrichtung gespeichert werden. Insbesondere kann bei der ersten Erfassung des Gepäckstücks ein erstes Gepäckstückabbild erzeugt werden. Ferner kann aus dem ersten Gepäckstückabbild eine erste Gepäckstückbeschreibung erzeugt werden. Die erste Gepäckstückbeschreibung kann als Vergleichsbeschreibung gespeichert werden.

Zweckmäßigerweise erfolgt die Prüfung bei oder zeitlich nach einer zweiten Erfassung des Gepäckstücks, wobei die zweite Erfassung zeitlich nach der ersten Erfassung stattfindet. Weiter können zwischen der ersten Erfassung und der zweiten Erfassung ein oder mehrere Transport- und/oder Sortierschritt(e) liegen. Insbesondere kann bei der zweiten Erfassung des Gepäckstücks ein zweites Gepäckstückabbild erzeugt werden. Weiter kann aus dem zweiten Gepäckstückabbild eine zweite Gepäckstückbeschreibung erzeugt werden. Bei der Prüfung kann insbesondere geprüft werden, ob die zweite Gepäckstückbeschreibung mit der Vergleichsbeschreibung übereinstimmt. Das heißt, die bei der Prüfung geprüfte Gepäckstückbeschreibung kann eine zweite Gepäckstückbeschreibung sein, welche insbesondere dieselben Eigenschaften und Merkmale wie die erstgenannte bzw. erste Gepäckstückbeschreibung aufweist.

Zweckmäßigerweise erfolgt die Prüfung automatisch, insbesondere mittels der Datenverarbeitungseinheit.

Die Datenbank kann mehrere Vergleichsbeschreibungen umfassen. Vorzugsweise umfassen die mehreren Vergleichsbeschreibungen die oben genannte Vergleichsbeschreibung. Die mehreren Vergleichsbeschreibungen können jeweils in einem Datensatz gespeichert sein. Zweckmäßigerweise werden die mehreren Vergleichsbeschreibungen (zumindest teilweise) nacheinander mit der Gepäckstückbeschreibung (bzw. der erweiterten Gepäckstückbeschreibung) verglichen.

Das Verfahren kann bei einer weiteren Prüfung eingesetzt werden. Bei der weiteren Prüfung wird vorzugsweise geprüft, welche der Vergleichsbeschreibungen der Datenbank die größte Übereinstimmung mit der Gepäckstückbeschreibung (bzw. erweiterten Gepäckstückbeschreibung) aufweist. Weiter kann die bei der weiteren Prüfung zu prüfende/geprüfte Gepäckstückbeschreibung die zweite Gepäckstückbeschreibung bzw. die zweite erweiterte Gepäckstückbeschreibung sein. Zweckmäßigerweise erfolgt die weitere Prüfung automatisch, insbesondere mittels der Datenverarbeitungseinheit.

Zur Prüfung der größten Übereinstimmung (bei der weiteren Prüfung) kann die zu prüfende Gepäckstückbeschreibung z. B. nacheinander mit jeder der in der Datenbank gespeicherten Vergleichsbeschreibungen verglichen werden. Bei jedem einzelnen Vergleich kann beispielsweise ein Grad der Übereinstimmung bestimmt werden. Diejenige Vergleichsbeschreibung, bei welcher der höchste Grad der Übereinstimmung erreicht wird, kann ausgewählt werden. Weiter können die Informationen des Datensatzes, in welchem die ausgewählte Vergleichsbeschreibung gespeichert ist, genutzt werden, insbesondere um das Gepäckstück sortieren/zuordnen zu können.

Vorzugsweise wird das Verfahren eingesetzt zur Identifizierung eines Gepäckstücks. Eine Identifizierung des Gepäckstücks kann beispielsweise durch eine eindeutige Zuordnung des Gepäckstücks zu einem Datensatz erfolgen. Insbesondere kann zumindest eine der zuvor genannten Prüfungen zu einer Identifizierung des Gepäckstücks führen.

Die Identifizierung kann während des Transportprozesses erfolgen, insbesondere um einen Zielort des Gepäckstücks zu ermitteln. Weiter kann die Identifizierung für gefundene Gepäckstücke erfolgen, insbesondere um den Eigentümer eines gefundenen Gepäckstücks zu ermitteln.

Ein Vorteil der Identifizierung des Gepäckstücks ist, dass direkt die Gepäckbeschreibung genutzt werden kann, um Informationen über das Gepäckstück zu erhalten. Die Verarbeitung des Gepäckstückes ist so dann ohne einen Barcode, eine Gepäcknummer und/oder ein Gepäcketikett möglich.

Zweckmäßigerweise wird das Verfahren zu einer Zuordnung eingesetzt. Die Gepäckstückbeschreibung kann dazu genutzt werden, dem Gepäckstück eine Information, insbesondere eine Transport-, Eigentümer- und/oder Verarbeitungsinformation, zuzuordnen.

Die Zuordnung einer Information kann dabei direkt aus der Gepäckbeschreibung erfolgen. Findet sich in der Gepäckbeschreibung beispielsweise ein bestimmtes Gepäckstückabmaß, welches auf Sperrgepäck schließen lässt, kann das Gepäckstück z. B. gesondert behandelt werden, insbesondere über eine bestimmte Sortierstrecke geleitet werden.

Weiter kann die Zuordnung einer Information über die Identifizierung des Gepäckstücks erfolgen. Dabei kann dem Gepäckstück eindeutig ein Datensatz zugeordnet werden, aus welchem die Information(en) abgelesen werden kann/können. Auf diese Weise kann dem Gepäckstück z. B. eine Gepäcknummer, eine Flugnummer, ein Zielort und/oder ein Eigentümernamen zugeordnet werden. Beispielsweise kann das Verfahren genutzt werden, um ein Eigentümer eines gefundenen Gepäckstücks zu ermitteln.

Weiter kann das Verfahren zu einer Abbilderstellung des Gepäckstücks eingesetzt werden. Bei der Abbilderstellung kann aus der Gepäckstückbeschreibung ein Abbild des Gepäckstücks erstellt werden. Insbesondere ist das Abbild des Gepäckstücks ein Bild des Gepäckstücks, eine schematische Darstellung des Gepäckstücks, ein 2D-Modell des Gepäckstücks und/oder ein 3D-Modell des Gepäckstücks. Die Abbilderstellung kann mittels der Datenverarbeitungseinheit erfolgen.

Weiter kann das Verfahren zum Auffinden eines vermissten Gepäckstücks eingesetzt werden. Insbesondere kann das Verfahren zum Auffinden eines vermissten Gepäckstücks eingesetzt werden, indem ein Abbild des Gepäckstücks aus der Gepäckstückbeschreibung erstellt wird.

Beispielsweise kann ein vermisstes Gepäckstück eines Eigentümers gefunden werden. Dazu wird beispielsweise in der Datenbank nach dem Eigentümernamen und/oder nach der Gepäcknummer gesucht und der Datensatz zu dem vermissten Gepäckstück gefunden. Aus dem Datensatz zu dem vermissten Gepäckstück, insbesondere aus der Vergleichsbeschreibung zu dem vermissten Gepäckstück, welche vorzugsweise in dem Datensatz zu dem vermissten Gepäckstück gespeichert ist, kann ein Abbild des vermissten Gepäckstücks erstellt werden. Weiter kann in dem Datensatz zu dem vermissten Gepäckstück gespeichert sein, an welchem Sammelpunkt sich das vermisste Gepäckstück befindet. Mithilfe des erstellten Abbildes des vermissten Gepäckstücks kann am Sammelpunkt nach dem vermissten Gepäckstück gesucht werden, insbesondere indem alle am Sammelpunkt befindlichen Gepäckstücke mit dem Abbild des vermissten Gepäckstücks verglichen werden. Auf diese Weise kann das vermisste Gepäckstück gefunden werden.

Weiter kann das Verfahren zum Auffinden eines vermissten Gepäckstücks eingesetzt werden, indem der Datensatz zu dem vermissen Gepäckstück und/oder die Vergleichsbeschreibung zu dem vermissten Gepäckstück mit anderen Datensätzen abgeglichen wird. Die anderen Datensätze können in derselben Datenbank gespeichert sein und/oder in einer anderen Datenbank z. B. eines anderen Flughafens gespeichert sein.

Das aus der Gepäckstückbeschreibung erstellte Abbild des Gepäckstücks kann mit einem Vergleichs-Abbild verglichen werden. Der Vergleich kann automatisch, insbesondere mittels der Datenverarbeitungseinheit, und/oder manuell erfolgen. Das Vergleichs-Abbild kann aus einer Vergleichsbeschreibung erstellt werden, insbesondere mittels der Datenverarbeitungseinheit. Insbesondere kann die Vergleichsbeschreibung die zuvor genannte Vergleichsbeschreibung sein.

Außerdem kann das Verfahren bei einer Gepäckstücküberprüfung eingesetzt werden. Zweckmäßigerweise wird bei der Gepäckstücküberprüfung geprüft, ob sich ein Aussehen des Gepäckstück verändert hat, insbesondere ob das Gepäckstück (z. B. beim Transport und/oder beim Sortieren) beschädigt wurde. Falls die Gepäckstücküberprüfung ergibt, dass sich das Gepäckstück verändert hat, insbesondere dass das Gepäckstück beschädigt wurde, kann bei der Gepäckstücküberprüfung weiter geprüft werden, in wieweit sich das Aussehen des Gepäckstücks verändert hat. Die Gepäckstücküberprüfung kann automatisch, insbesondere mittels der Datenverarbeitungseinheit, und/oder manuell erfolgen.

Beispielsweise kann die Gepäckstücküberprüfung unter Verwendung des erstellten Abbildes erfolgen. Insbesondere kann bei der Gepäckstückprüfung geprüft werden, ob sich das aus der Gepäckstückbeschreibung erstellte Abbild des Gepäckstücks von dem Vergleichs-Abbild unterscheidet. Weiter kann bei der Gepäckstücküberprüfung geprüft werden, in wieweit sich das aus der Gepäckstückbeschreibung erstellte Abbild des Gepäckstücks von dem Vergleichs-Abbild unterscheidet, d. h. welche Unterschiede zwischen dem aus der Gepäckstückbeschreibung erstellten Abbild des Gepäckstücks und dem Vergleichs-Abbild bestehen.

Ferner kann die Gepäckstücküberprüfung unter Verwendung der Gepäckstückbeschreibung erfolgen. Insbesondere kann bei der Gepäckstückprüfung geprüft werden, ob sich die Gepäckstückbeschreibung von der Vergleichsbeschreibung unterscheidet. Weiter kann bei der Gepäckstücküberprüfung geprüft werden, in wieweit sich die Gepäckstückbeschreibung von der Vergleichsbeschreibung unterscheidet, d. h. welche Unterschiede zwischen der Gepäckstückbeschreibung und der Vergleichsbeschreibung bestehen. Insbesondere kann die bei der Gepäckstücküberprüfung geprüfte Gepäckstückbeschreibung die zweite Gepäckstückbeschreibung sein.

Falls die Gepäckstücküberprüfung ergibt, dass sich das Gepäckstück verändert hat, insbesondere dass das Gepäckstück beschädigt wurde, kann bei der Gepäckstücküberprüfung weiter geprüft werden, in welchen Transportschritten die Veränderung/Beschädigung passiert ist. Zweckmäßigerweise wird dazu das Gepäckstück mehrmals im Laufe seines Transports an verschiedenen Gepäckbeschreibungssystemen auf die zuvor beschriebene Weise erfasst. Zweckmäßigerweise wird bei jeder der Erfassungen eine Gepäckstückbeschreibung erstellt. Jede der erstellten Gepäckstückbeschreibungen des Gepäckstücks wird vorzugsweise gemeinsam z. B. mit einer Kennnummer des Gepäckbeschreibungssystems gespeichert, insbesondere in der Datenbank. Beispielsweise kann ein Datensatz zu dem Gepäckstück mehrere Gepäckstückbeschreibungen dieses Gepäckstücks und ggf. die dazugehörigen Kennnummern des jeweiligen Gepäckbeschreibungssystems umfassen.

In einer vorteilhaften Ausgestaltung der Erfindung wird das Verfahren bei einer Vielzahl von Gepäckstücken eingesetzt, wobei vorzugsweise für jedes der Gepäckstücke eine Gepäckstückbeschreibung erstellt wird.

Weiter kann das Verfahren zur statistischen Auswertung von visuellen Merkmalen von Gepäckstücken eingesetzt werden, insbesondere wenn das Verfahren bei einer Vielzahl von Gepäckstücken eingesetzt wird. Zweckmäßigerweise werden bei der statistischen Auswertung von visuellen Merkmalen zumindest ein Teil der erfassten visuellen Merkmale der Gepäckstücke statistisch ausgewertet.

Beispielsweise kann die statistische Auswertung der Gepäckstückabmaße (bei einer Vielzahl von Gepäckstücken) zur Transportoptimierung, insbesondere für eine Optimierung der Beladung eines Transportwagens und/oder eines Flugzeugs, genutzt werden. Weiter kann beispielsweise die statistische Auswertung der Gepäckstückform, -farbe und/oder -marke für ein Produktdesign und/oder für Werbezwecke genutzt werden.

Die statistische Auswertung kann beispielsweise nach bestimmten Kriterien, wie z. B. nach dem Startflughafen, nach einem Abflugsland, nach einer Jahreszeit, nach einem Geschlecht des Eigentümers des Gepäckstücks und/oder nach Ähnlichem, erfolgen. Beispielsweise kann die statistische Auswertung für mehrere Jahreszeiten, z. B. für Sommer und Winter, getrennt durchgeführt werden. Auf diese Weise kann untersucht werden, ob sich zumindest ein Teil der erfassten visuellen Merkmale, z. B. eine Farbe des Gepäckstücks, für verschiedene Jahreszeiten unterscheidet.

Ferner betrifft die Erfindung ein Gepäckbeschreibungssystem, welche erfindungsgemäß eine visuelle Erfassungseinrichtung und eine Datenverarbeitungseinheit zur Ausführung des zuvor genannten Verfahrens umfasst. Insbesondere betrifft die Erfindung ein Gepäckbeschreibungssystem mit einer visuellen Erfassungseinrichtung zur visuellen Erfassung des Gepäckstücks als Gepäckstückbild und ein Datenverarbeitungseinheit zur Extraktion visueller Merkmale des Gepäckstücks aus dem Gepäckstückbild sowie zur Erstellung einer Gepäckstückbeschreibung aus den extrahierten visuellen Merkmalen des Gepäckstücks.

Das Gepäckbeschreibungssystem kann zur Durchführung des oben beschriebenen Verfahrens eingesetzt werden. Folglich können die Elemente des Gepäckbeschreibungssystems die zuvor im Zusammenhang mit dem Verfahren erwähnten Elemente sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Gepäckbeschreibungssystem kombinierbar. So sind Verfahrensmerkmale auch als Eigenschaft des entsprechenden Gepäcksortiersystems gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet, aus dem Ausführungsbeispiel entfernt und/oder mit einem beliebigen der Ansprüche kombiniert werden.

Es zeigen:
- FIG 1: ein Gepäckbeschreibungssystem mit einer visuellen Erfassungseinrichtung und einer Datenverarbeitungseinheit;
- FIG 2: ein Gepäckstücklogo und ein Gepäckstückmarkenname;
- FIG 3: ein erstes Zusatzelement des Gepäckstücks;
- FIG 4: ein zweites Zusatzelement des Gepäckstücks;
- FIG 5: ein drittes Zusatzelement des Gepäckstücks; und
- FIG 6: eine Datenbank, welche in einer Cloud gespeichert ist.

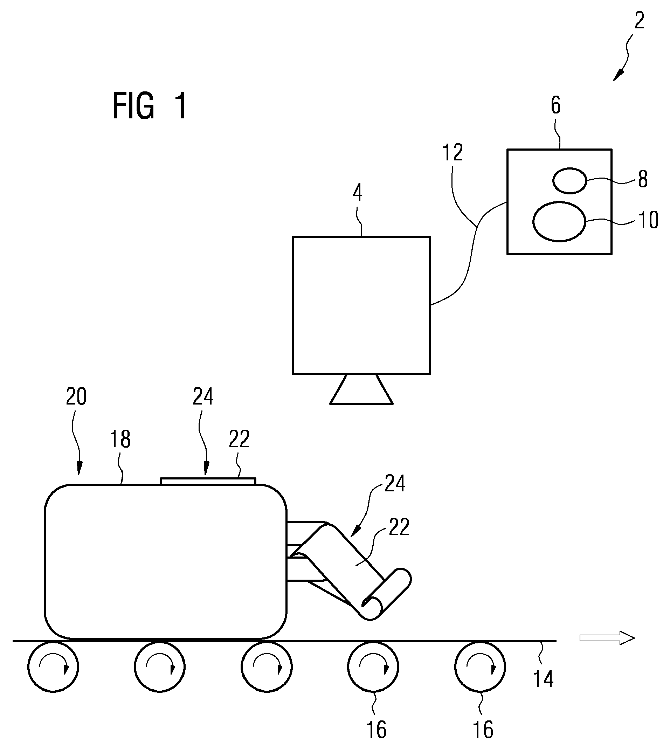

FIG 1 zeigt schematisch ein Gepäckbeschreibungssystem 2 mit einer visuellen Erfassungseinrichtung 4 und einer Datenverarbeitungseinheit 6. Die visuelle Erfassungseinrichtung 4 ist als Kamera ausgebildet. Weiter umfasst die Datenverarbeitungseinheit 6 eine Datenbank 8 sowie ein Computerprogramm 10. Das Computerprogramm 10 läuft auf der Datenverarbeitungseinheit 6 ab.

Die visuelle Erfassungseinrichtung 4 und die Datenverarbeitungseinheit 6 sind durch eine Datentransferverbindung 12 miteinander verbunden. Die Datentransferverbindung 12 kann z. B. ein Kabel sein. Weiter kann die Datentransferverbindung 12 z. B. eine drahtlose Verbindung sein.

Weiter ist in FIG 1 ein Gepäckband 14 dargestellt, welches über Rollen 16 läuft. Die Bewegungsrichtungen der Rollen 16 sowie des Gepäckbandes 14 sind durch Pfeile dargestellt. Auf dem Gepäckband 14 befindet sich ein Gepäckstück 18, insbesondere ein Fluggepäckstück. Prinzipiell könnte das Gepäckstück 18 auch z. B. über Gepäckschalen und/oder ein anderes Gepäcktransportmittel transportiert werden.

Das Gepäckstück 18 weist mehrere visuelle Merkmale 20 des Gepäckstücks 18 auf. An dem Gepäckstück 18 ist ein Zusatzelement 22 befestigt, wobei das Zusatzelement 22 lösbar mit dem Gepäckstück 18 verbunden ist. Auch das Zusatzelement 22 weist mehrere visuelle Merkmale 24 des Zusatzelements 22 auf.

Das Gepäckstück 18 wird mittels der visuellen Erfassungseinrichtung 4 erfasst. Weiter wird mittels der visuellen Erfassungseinrichtung 4 ein Gepäckstückabbild erzeugt. Das Gepäckstückabbild umfasst eine Oberseite des Gepäckstücks 18 und liegt in Form eines Pixelbildes vor. Außerdem werden aus dem Gepäckstückabbild 18 visuelle Merkmale 20 des Gepäckstücks 18 extrahiert, insbesondere mittels der Datenverarbeitungseinheit 6.

In diesem Beispiel sind die extrahierten visuellen Merkmale des Gepäckstücks 18 ein Gepäckstückabmaß, insbesondere eine Länge und eine Breite des Gepäckstücks, eine Gepäckstückform, eine Gepäckstückfarbe, eine Gepäckstückmusterung, ein Gepäckstücklogo 26 und ein Gepäckstückmarkenname 28.

Ferner wird aus den extrahierten visuellen Merkmalen 20 des Gepäckstücks 18 eine Gepäckstückbeschreibung erstellt, insbesondere in Form eines Beschreibungsvektors. Der Beschreibungsvektor umfasst mehrere Vektorfelder, wobei jedes Vektorfeld ein visuelles Merkmal 20 des Gepäckstücks 18 umfasst.

Alle Schritte (visuelle Erfassung, Erzeugung des Gepäckstückabbildes, Extraktion der visuellen Merkmale 18 und Erstellung der Gepäckstückbeschreibung) erfolgen in diesem Ausführungsbeispiel vollautomatisch, d. h. ohne manuelles Eingreifen einer Person.

Prinzipiell wäre es auch möglich, dass die visuelle Erfassungseinrichtung eine Handkamera ist, sodass die visuelle Erfassung teilautomatisch erfolgen würde.

Beispielsweise kann die Form der Gepäckstückbeschreibung wie folgt sein:
[Länge des Gepäckstücks, Breite des Gepäckstücks, Gepäckstückform, Gepäckstückfarbe, Gepäckstückmusterung, Gepäckstücklogo 26, Gepäckstückmarkenname 28].
Insbesondere kann die Gepäckstückbeschreibung wie folgt lauten:
[60 cm, 40 cm, rechteckig, RGB 139/69/19, 0, L 221, Koffermacher].

Die Gepäckbeschreibung umfasst Ziffern und Buchstaben. Die visuellen Merkmale 20 des Gepäckstücks 18 können ausgeschrieben sein, abgekürzt sein und/oder codiert sein. Weiter kann das Fehlen eines visuellen Merkmals auch als visuelles Merkmal verstanden werden. Z. B. fehlt dem Gepäckstück 18 eine Gepäckmusterung - d. h. das Gepäckstück 18 ist nicht gemustert (visuelles Merkmal 20: "keine Gepäckmusterung") - und im entsprechenden Vektorfeld "Gepäckmusterung" ist eine Null eingetragen.

Das an dem Gepäckstück 18 angeordnete Zusatzelement 22 wird ebenfalls mittels der visuellen Erfassungseinrichtung 4 erfasst, mittels welcher ein Zusatzabbild erzeugt wird. Aus dem Zusatzabbild werden visuelle Merkmale 24 des Zusatzelementes 22 extrahiert und aus den extrahierten visuellen Merkmalen 24 des Zusatzelementes 22 wird eine Zusatzbeschreibung erstellt, insbesondere jeweils mittels der Datenverarbeitungseinheit 6. Auch die Zusatzbeschreibung liegt in Form eines Vektors vor. Weiter bildete die Zusatzbeschreibung gemeinsam mit der Gepäckstückbeschreibung eine erweiterte Gepäckstückbeschreibung.

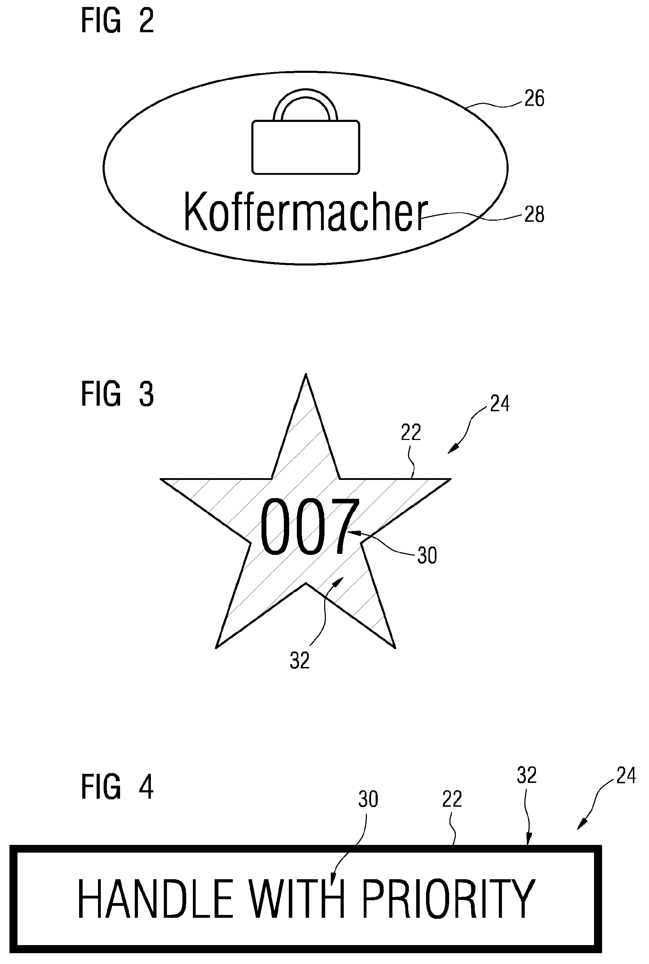

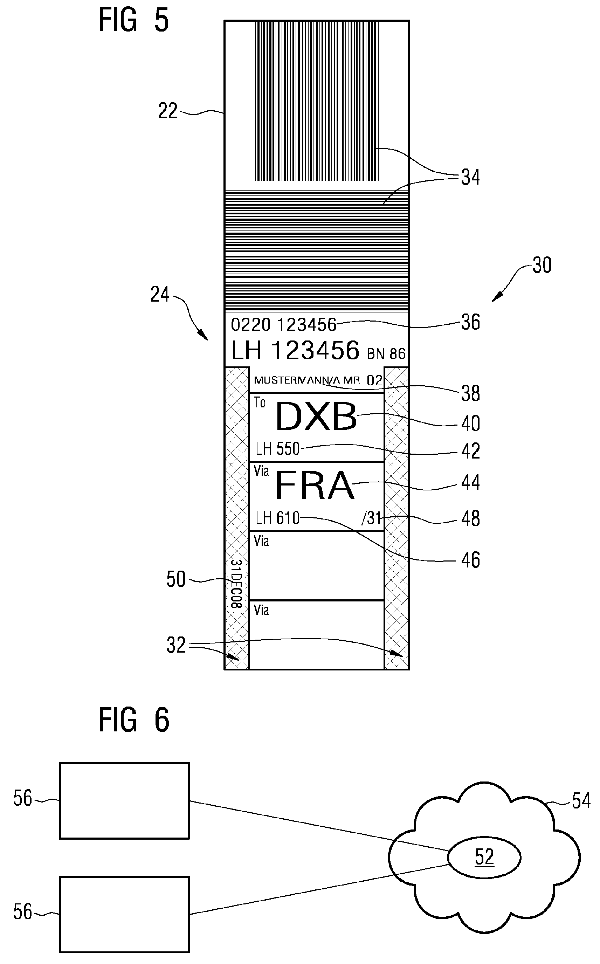

Das Zusatzelement 22 kann z. B. das in FIG 3, in FIG 4 oder in FIG 5 gezeigte Zusatzelement 22 sein.

Das Zusatzelement 22 umfasst einen Informationssatz 30 in Form von Klartext 30 (siehe Figuren 3-5). Bei der visuellen Erfassung wird der Informationssatz 30 zumindest teilweise visuell erfasst und zumindest ein Teil des Informationssatzes 30 mittels einer optischen Texterkennung, insbesondere mittels OCR ("optical character recognition"), erkannt. Der erkannte Teil des Informationssatzes 30 kann in der Zusatzbeschreibung und/oder in einer Informationssatzbeschreibung zumindest teilweise gespeichert werden (vgl. Figuren 3-5). Die Informationssatzbeschreibung liegt in Form eines Vektors vor.

Die Extraktion von visuellen Merkmalen 20, 24 erfolgt unter Verwendung von Vorwissen und unter Verwendung von trainierbaren Systemen.

In der Datenverarbeitungseinheit 6 ist das Vorwissen gespeichert. Beispielsweise sind als Vorwissen verschiedene Gepäckstücklogo-Vorlagen und Gepäckstückmarkennamen-Vorlagen gespeichert. Weiter sind den gespeicherten Gepäckstücklogo-Vorlagen z. B. Kennnummern zugeordnet. Entspricht ein extrahiertes Gepäckstücklogo im Wesentlichen einer Gepäckstücklogo-Vorlage, so wird das extrahierte Gepäckstücklogo in der Gepäckstückbeschreibung mit der entsprechenden Kennnummer der entsprechenden Gepäckstücklogo-Vorlage codiert. (Siehe auch FIG 2)

Weiter ist die Datenverarbeitungseinheit 6, insbesondere ein Computerprogramm 10 der Datenverarbeitungseinheit 6, ein trainierbares System. Beispielsweise wird ein Gepäckstücklogo auch dann einer Gepäckstücklogo-Vorlage zugeordnet, wenn das Gepäckstücklogo in einem vorgegebenen Maße verändert ist, z. B. wenn das Gepäckstücklogo einen Kratzer aufweist, wenn das Gepäckstücklogo verschmutzt ist, wenn eine Farbe des Gepäckstücklogos in einem vorgegebenen Maße verändert ist und/oder ähnliches.

Weiter können als Vorwissen bestimmte visuelle Merkmale 24 von Zusatzelementen 22 gespeichert sein. Näheres hierzu ist in den Figuren 4 und 5 beschrieben.

Die bei der visuellen Erfassung des Gepäckstücks 18 erstellte Gepäckstückbeschreibung bzw. erweiterte Gepäckstückbeschreibung wird als Vergleichsbeschreibung gespeichert, insbesondere in der Datenbank 8. Die Datenbank 8 umfasst einen Datensatz, welcher wiederum die Vergleichsbeschreibung umfasst. Außerdem umfasst der Datensatz weitere Informationen und/oder die Informationssatzbeschreibung. Insbesondere umfasst der Datensatz eine Gepäcknummer, einen Eigentümernamen, eine Flugnummer, einen Zielflughafen und so weiter.

Weiter wird die Vergleichsbeschreibung an beliebigen Orten ("Wo"), zu beliebigen Zeiten ("Wann"), für beliebige Personen ("Für wen") und für beliebige Zwecke ("Wofür") zur Verfügung gestellt. Insbesondere wird die Vergleichsbeschreibung weiteren oder auch allen am Transport des Gepäckstücks 18 beteiligen Flughäfen zur Verfügung gestellt. Dabei wird der Datensatz, in welchem die Vergleichsbeschreibung gespeichert ist, den weiteren oder den allen am Transport des Gepäckstücks 18 beteiligen Flughäfen zur Verfügung gestellt. In diesem Beispiel wird der Datensatz bzw. die Vergleichsbeschreibung an alle am Transport des Gepäckstücks 18 beteiligen Flughäfen übermittelt und der Datensatz bzw. die Vergleichsbeschreibung wird lokal in der Datenbank 8 des Flughafens gespeichert.

Die visuelle Erfassung (mittels der visuellen Erfassungseinrichtung 4) zur Speicherung der Vergleichsbeschreibung ist in diesem Fall eine erste visuelle Erfassung. Weiter wird eine erste Gepäckstückbeschreibung als Vergleichsbeschreibung gespeichert.

Im Verlauf des Transports des Gepäckstücks 18 kommt das Gepäckstück 18 zu einem identischen zweiten Gepäckbeschreibungssystem 2. Dort wird das Gepäckstück 18 ein zweites Mal erfasst, was eine zweite Gepäckstückbeschreibung (bzw. eine zweite erweiterte Gepäckstückbeschreibung) liefert. Die zweite Gepäckstückbeschreibung bzw. die zweite erweiterte Gepäckstückbeschreibung werden im Folgenden nur als zweite Gepäckstückbeschreibung bezeichnet.

Weiter wird bei einer Prüfung geprüft, ob die zweite Gepäckstückbeschreibung mit einer Vergleichsbeschreibung, welche insbesondere in der Datenbank 8 gespeichert ist, übereinstimmt. Die Vergleichsbeschreibung kann die zuvor genannte Vergleichsbeschreibung oder eine andere in der Datenbank 8 gespeicherte Vergleichsbeschreibung sein. Die Prüfung wird automatisch mittels der Datenverarbeitungseinheit 6, insbesondere mittels dem Computerprogramm 10, durchgeführt. Zweckmäßigerweise umfasst die Datenbank 8 mehrere Vergleichsbeschreibungen, unter anderem die erstgenannte Vergleichsbeschreibung. Z. B. kann die zweite Gepäckbeschreibung nacheinander mit jeder der mehreren Vergleichsbeschreibungen verglichen werden.

In diesem Beispiel stimmt die zweite Gepäckstückbeschreibung mit keiner der mehreren Vergleichsbeschreibungen überein, z. B. weil das Gepäckstück auf dem Transport beschädigt wurde.

Außerdem wird bei einer weiteren Prüfung geprüft, welche der Vergleichsbeschreibungen der Datenbank 8 die größte Übereinstimmung mit der zweiten Gepäckstückbeschreibung aufweist. Diejenige Vergleichsbeschreibung, welche am besten mit der zweiten Gepäckstückbeschreibung übereinstimmt, wird dem Gepäckstück 18 zugeordnet. Durch einen Vergleich der zweiten Gepäckstückbeschreibung mit derjenigen Vergleichsbeschreibung, welche am besten mit der zweiten Gepäckstückbeschreibung übereinstimmt, kann geprüft werden, ob und in wieweit sich ein Aussehen des Gepäckstücks 18 verändert hat, insbesondere ob und in wieweit das Gepäckstück 18 beschädigt wurde.

Außerdem wird derjenige Datensatz dem Gepäckstück 18 zugeordnet, welcher diejenige Vergleichsbeschreibung umfasst, die am besten mit der zweiten Gepäckstückbeschreibung übereinstimmt. Auf diese Weise wird das Verfahren zur Identifizierung des Gepäckstücks 18 eingesetzt. Aus dem Datensatz, welche der zweiten Gepäckstückbeschreibung zugeordnet wurde, werden dann weitere Informationen abgelesen - d. h. die Informationen werden der zweiten Gepäckstückbeschreibung und damit dem Gepäckstück 18 zugeordnet.

Beispielsweise kann die Identifizierung während des Transportprozesses erfolgen, insbesondere um einen Zielort des Gepäckstücks 18 zu ermitteln. Weiter kann das Gepäckstück 18 ein gefundenes Gepäckstück 18 sein - d. h. die Identifizierung kann für ein gefundenes Gepäckstück 18 erfolgen, insbesondere um den Eigentümer eines gefundenen Gepäckstücks 18 zu ermitteln.

Auf diese Weise wird das Verfahren zu einer Zuordnung eingesetzt, wobei die zweite Gepäckstückbeschreibung dazu genutzt wird, dem Gepäckstück eine Information - insbesondere aus dem Datensatz, welcher die passende Vergleichsbeschreibung umfasst - zuzuordnen.

Beispielsweise wird dem Gepäckstück 18 eine Transport-, eine Eigentümer- und/oder eine Verarbeitungsinformation, insbesondere eine Gepäcknummer, eine Flugnummer, ein Zielort und/oder ein Eigentümernamen, zugeordnet. Z. B. kann das Verfahren genutzt werden, um einen Eigentümer eines gefundenen Gepäckstücks 18 zu ermitteln.

Weiter kann dem Gepäckstück 18 direkt aus der zweiten Gepäckstückbeschreibung eine Information zugeordnet werden. Ist die zweite Gepäckbeschreibung die erweiterte zweite Gepäckstückbeschreibung, so finden sich in der zweiten Gepäckbeschreibung auch visuelle Merkmale 24 des Zusatzelements 22. Beispielsweise können auf dem Zusatzelement 22 Verarbeitungsinformationen vermerkt sein, wie z. B. auf dem Zusatzelement 22 aus FIG 4. Aufgrund der erfassten und extrahierten visuellen Merkmale 24 des Zusatzelementes 22 und/oder des erkannten Teils des Informationssatzes 30 wird das Gepäckstück 18 gesondert behandelt, insbesondere wird das Gepäckstück 18 über eine bestimmte Sortierstrecke geleitet.

Prinzipiell ist es möglich, dass das Gepäckstück 18 mehrere Zusatzelemente 22, z. B. zwei der in den Figuren 3-5 gezeigten oder alle der in den Figuren 3-5 gezeigten Zusatzelemente 22, aufweist.

Weiter wird das Verfahren zu einer Abbilderstellung des Gepäckstücks 18 eingesetzt, wobei aus der zweiten Gepäckstückbeschreibung ein Abbild des Gepäckstücks 18 erstellt wird, insbesondere mittels der Datenverarbeitungseinheit 6. Das Abbild des Gepäckstücks 18 ist z. B. ein 2D-Modell des Gepäckstücks 18.

Das Abbild des Gepäckstücks 18 wird mit einem Vergleichs-Abbild verglichen werden, welches Vergleichs-Abbild aus der Vergleichsbeschreibung erstellt wird. Weiter wird eine Gepäcküberprüfung durchgeführt, bei welcher das Abbild des Gepäckstücks 18 mit dem Vergleichsabbild verglichen wird, um zu prüfen, ob und in wieweit sich ein Aussehen des Gepäckstücks 18 verändert hat, insbesondere ob und in wieweit das Gepäckstück (z. B. beim Transport und/oder beim Sortieren) beschädigt wurde.

Prinzipiell kann bei dem Verfahren zur Abbilderstellung auch aus der ersten Gepäckstückbeschreibung ein Abbild des Gepäckstücks 18 erstellt werden. Insbesondere kann auf diese Weise ein vermisstes Gepäckstück 18 gefunden werden. Beispielsweise kann das vermisste Gepäckstück 18 eines Eigentümers gefunden werden. Dazu wird beispielsweise in der Datenbank 8 nach dem Eigentümernamen und/oder nach der Gepäcknummer gesucht und der Datensatz zu dem vermissten Gepäckstück 18 gefunden. Aus dem Datensatz zu dem vermissten Gepäckstück 18, insbesondere aus der Vergleichsbeschreibung zu dem vermissten Gepäckstück 18, welche vorzugsweise in dem Datensatz zu dem vermissten Gepäckstück 18 gespeichert ist, kann ein Abbild des vermissten Gepäckstücks 18 erstellt werden. Weiter kann in dem Datensatz zu dem vermissten Gepäckstück 18 gespeichert sein, an welchem Sammelpunkt sich das vermisste Gepäckstück 18 befindet. Mithilfe des erstellten Abbildes des vermissten Gepäckstücks 18 kann am Sammelpunkt nach dem vermissten Gepäckstück 18 gesucht werden, insbesondere indem manuell alle am Sammelpunkt befindlichen Gepäckstücke mit dem Abbild des vermissten Gepäckstücks 18 verglichen werden. Auf diese Weise kann das vermisste Gepäckstück 18 gefunden werden.

Weiter kann ein vermisste Gepäckstück 18 gefunden werden, indem der Datensatz zu dem vermissen Gepäckstück 18 und/oder die Vergleichsbeschreibung zu dem vermissten Gepäckstück 18 mit anderen Datensätzen abgeglichen wird. Die anderen Datensätze können beispielsweise in einer anderen Datenbank z. B. eines anderen Flughafens gespeichert sein.

Das aus der Gepäckstückbeschreibung erstellte Abbild des Gepäckstücks 18 kann mit einem Vergleichs-Abbild verglichen werden. Das Vergleichs-Abbild kann aus einer Vergleichsbeschreibung erstellt werden. Insbesondere kann die Vergleichsbeschreibung die zuvor genannte Vergleichsbeschreibung sein.

Das gezeigte Verfahren wird bei einer Vielzahl von Gepäckstücken 18 eingesetzt, wobei jedes Gepäckstück 18 visuelle Merkmale 20 aufweist. Außerdem kann jedes Gepäckstück 18 ein oder mehrere Zusatzelement(e) 22 aufweisen. Weiter werden ein Teil der erfassten visuellen Merkmale 20 der Gepäckstücke 18 statistisch ausgewertet. Beispielsweise kann das Gepäckabmaß statistisch ausgewertet werden, um die Beladung von Transportwagen und/oder Flugzeugen zu optimieren. Weiter kann die Gepäckstückfarbe in der Jahreszeit Sommer statistisch ausgewertet werden, z. B. um die im Sommer meistgenutzte Gepäckfarbe für ein Produktdesign zu nutzen.

Ferner können ein Teil der erfassten visuellen Merkmale 24 der Zusatzelemente 22 statistisch ausgewertet werden. Beispielsweise kann die Häufigkeit von bestimmten Verarbeitungsinformationen ausgewertet werden, z. B. um eine Auslastung einer bestimmten Sortierstrecke zu bestimmen.

FIG 2 zeigt exemplarische das Gepäckstücklogo 26 des Gepäckstücks 18 aus FIG 1. Das Gepäckstücklogo 26 ist oval, grau gefärbt und enthält das Symbol eines Koffers sowie den Gepäckstückmarkenname 28 "Koffermacher".

In der Datenverarbeitungseinheit 6 aus FIG 1 sind verschiedene Gepäckstücklogo-Vorlagen und Gepäckstückmarkennamen-Vorlagen als Vorwissen gespeichert. Das extrahierte Gepäckstücklogo 26 entspricht im Wesentlichen einer Gepäckstücklogo-Vorlage, welcher die Kennnummer "L 221" zugeordnet ist, und wird in der Gepäckstückbeschreibung mit der entsprechenden Kennnummer codiert.

FIG 3 zeigt exemplarisch ein erstes mögliches Zusatzelement 22 des Gepäckstücks 18 aus FIG 1. Das Zusatzelement 22 ist als Aufkleber auf dem Gepäckstück 18 ausgeführt. Weiter umfasst das Zusatzelement 22 einen Informationssatz 30 in Form von Klartext 30.

Die visuelle Erfassungseinrichtung 4 aus FIG 1 erfasst das Zusatzelement 22 mit dem Gepäckstück 18 in einem gemeinsamen Pixelbild. D. h. das Zusatzabbild ist ein Teilbereich des Pixelbildes und das Gepäckstückabbild ist ein anderer Teilbereich des Pixelbildes.

Aus dem erfassten Zusatzabbild wird - wie bereits in FIG 1 erläutert - eine Zusatzbeschreibung erstellt.

Beispielsweise kann die Form der Zusatzbeschreibung wie folgt sein:
[Länge des Zusatzelements 22, Breite des Zusatzelements 22, Form des Zusatzelements 22, Farbe des Zusatzelements 22, Musterung 32 des Zusatzelements 22, Klartext 30, Farbe des Klartextes 30, Position des Klartextes 30].
Insbesondere kann die Zusatzbeschreibung wie folgt lauten:
[8 cm, 8 cm, sternförmig, RGB 255/255/255, dünne Streifen RGB 0/0/0 mit Streifenabstand 0,8 cm, "007", RGB 0/0/0, mittig].

Das heißt, hier wird beispielsweise der Informationssatz 30 in Form von Klartext 30 mit in der Zusatzbeschreibung erfasst.

FIG 4 zeigt exemplarisch ein zweites mögliches Zusatzelement 22 des Gepäckstücks 18 aus FIG 1. Das Zusatzelement 22 kann als Aufkleber oder als Anhänger ausgeführt sein.

Die visuelle Erfassungseinrichtung 4 aus FIG 1 erfasst das Zusatzelement 22 mit dem Gepäckstück 18 in einem gemeinsamen Pixelbild.

Das Zusatzelement 22 weist als Musterung 32 einen roten Rand mit einer Linienbreite von 0,5 cm auf. Weiter umfasst das Zusatzelement 22 einen Informationssatz 30 in Form von Klartext 30 auf. Der Informationssatz 30 in Form von Klartext 30 beinhaltet eine Verarbeitungsinformation. Der Klartext 30 ist rot geschrieben.

Beispielsweise kann die Form der Zusatzbeschreibung wie folgt sein:
[Länge des Zusatzelements 22, Breite des Zusatzelements 22, Form des Zusatzelements 22, Farbe des Zusatzelements 22, Musterung des Zusatzelements 22, Klartext 30, Farbe des Klartextes 30, Position des Klartextes 30].
Insbesondere kann die Zusatzbeschreibung wie folgt lauten:
[25 cm, 4 cm, rechteckig, weiß, roten Rand mit einer Linienbreite von 0,5 cm, ja, rot, mittig].

In der Datenverarbeitungseinheit aus FIG 1 sind verschiedene Zusatzelement-Vorlagen als Vorwissen gespeichert. Den visuellen Merkmalen "roten Rand mit einer Linienbreite von 0,6 cm" und "roter Klartext" ist "als Vorwissen" die Verarbeitungsinformation "gesondert behandeln" zugeordnet. Weiter hat die Datenverarbeitungseinheit 6 bereits gelernt, dass die Linienbreite des Randes im Bereich ±0,2cm variieren kann. Demnach ordnet das Datenverarbeitungssystem dem Gepäckstück 18 die Verarbeitungsinformation "gesondert behandeln" zu und das Gepäckstück 18 wird über eine bestimmte Sortierstrecke geleitet.

Weiter kann zumindest ein Teil des Informationssatzes 30 in Form von Klartext 30 mittels der Texterkennung erkannt werden. Beispielsweise wird der erkennte Teil des Informationssatzes 30 in einer Informationssatzbeschreibung erfasst, welche wie folgt lautet: ["HANDLE WITH PRIORITY"]

In der Datenverarbeitungseinheit 6 ist als Vorwissen gespeichert, dass der Text "HANDLE WITH PRIORITY" unabhängig von Groß-/Kleinschreibung bedeutet, dass das Gepäckstück 18 über eine bestimmte Sortierstrecke geleitet werden soll.

Der erkannte Informationssatz 30 führt folglich ebenfalls zu einer entsprechenden Sortierung, sodass das Gepäckstück 18 über die bestimmte Sortierstrecke geleitet wird.

FIG 5 zeigt exemplarisch ein drittes mögliches Zusatzelement 22 des Gepäckstücks 18 aus FIG 1. Das Zusatzelement 22 ist als Gepäcketikett ausgeführt.

Die visuelle Erfassungseinrichtung 4 aus FIG 1 erfasst das Zusatzelement 22 und das Gepäckstück 18.

Beispielsweise kann die Form der Zusatzbeschreibung wie folgt sein:
[Länge des Zusatzelements 22, Breite des Zusatzelements 22, Form des Zusatzelements 22, Farbe des Zusatzelements 22, Musterung 32 des Zusatzelements 22, Klartext 30, Farbe des Klartextes 30, Position des Klartextes 30].
Insbesondere kann die Zusatzbeschreibung wie folgt lauten:
[5 cm, 20 cm, rechteckig, weiß, grüne Streifen mit einer Strichdicke von 0,5 cm, ja, schwarz, mehrere].

Weiter wird zumindest ein Teil des Informationssatzes 30 in Form von Klartext 30 mittels der Texterkennung erkannt. Zudem umfasst das Zusatzelement 22 einen Barcode 34, welcher ebenfalls erkannt wird. Der erkannte Teil des Informationssatzes 30 wird (gemeinsam mit dem erkannten Barcode 34) zumindest teilweise in einer Informationssatzbeschreibung erfasst, welche beispielsweise folgende Form aufweist:
[decodierter Barcode 34, Gepäcknummer 36, Eigentümername 38, Zielflughafenkürzel 40, Flugnummer 42, Zwischenflughafenkürzel 44, Flugnummer 46, Flugdatum 48, Ausstellungsdatum 50]
Der erkannte Informationssatz lautet wie folgt:
[0220 123456, 0220 123456, Mr A Mustermann, DXB, LH 550, Flugnummer FRA, LH 610, 31, 31DEC08]

In der Datenverarbeitungseinheit 6 aus FIG 1 sind verschiedene Zusatzelement-Vorlagen als Vorwissen gespeichert. Dem visuellen Merkmal, "grüne Streifen" "mit einer Strichdicke von 0,5 cm", ist als Vorwissen, "Gepäckstück wurde im Schengen-Raum aufgegeben" und die Fluggesellschaft ist Lufthansa", zugeordnet. Weiter hat die Datenverarbeitungseinheit 6 bereits gelernt, dass der Grünton in seiner Helligkeit und seinem Gelbanteil variieren kann. Demnach ordnet das Datenverarbeitungssystem dem Gepäckstück 18 die Information, "Gepäckstück wurde im Schengen-Raum aufgegeben", zu.

Weiter kann als Vorwissen in der Datenverarbeitungseinheit 6 gespeichert sein, dass jedes Element, welches einen Barcode 34 aufweist, ein Gepäcketikett ist. Weiter kann in der Datenverarbeitungseinheit 6 als Vorwissen gespeichert sein, welche Form der Informationssatz 30 eines Gepäcketiketts hat und an welcher Position des Gepäcketiketts welche Informationen des Informationssatzes zu finden sind.

Das Gepäckstück 18 wird unter Verwendung der erkannten visuellen Merkmale 20 sowie unter Verwendung des erkannten Teils des Informationssatzes 30 automatisch sortiert. Demnach wird das Gepäckstück 18 z. B. auf ein entsprechendes Gepäckband befördert, mit einem entsprechenden Gepäckband transportiert, zu einer entsprechenden Ladezone transportiert, zu einem entsprechenden Gate transportiert und/oder auf ein entsprechendes Gepäckausgabeband befördert.

FIG 6 zeigt eine Datenbank 52, welche eine Alternative zu der in FIG 1 gezeigten Datenbank 8 darstellt.

Die in FIG 6 gezeigte Datenbank 52 ist in einer Cloud 54 gespeichert (und demnach nicht in der Datenverarbeitungseinheit aus FIG 1). Die Datenbank 52 umfasst den Datensatz des Gepäckstücks 18, welcher die Vergleichsbeschreibung umfasst. Jeder am Transport des Gepäckstücks 18 beteiligte Flughafen 56 kann auf die Datenbank 52 zugreifen. Insbesondere umfasst die Datenbank 52 mehrere Datensätze, unter anderem den oben genannten Datensatz, wobei jeder der Datensätze eine Vergleichsbeschreibung umfasst.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: Gepäckbeschreibungssystem
- 4: Erfassungseinrichtung
- 6: Datenverarbeitungseinheit
- 8: Datenbank
- 10: Computerprogramm
- 12: Datentransferverbindung
- 14: Gepäckband
- 16: Rolle
- 18: Gepäckstück
- 20: Merkmal
- 22: Zusatzelement
- 24: Merkmal
- 26: Gepäckstücklogo
- 28: Gepäckstückmarkenname
- 30: Informationssatz, Klartext
- 32: Musterung
- 34: Barcode
- 36: Gepäcknummer
- 38: Eigentümername
- 40: Zielflughafenkürzel
- 42: Flugnummer
- 44: Zwischenflughafenkürzel
- 46: Flugnummer
- 48: Flugdatum
- 50: Ausstellungsdatum
- 52: Datenbank
- 54: Cloud
- 56: Flughafen

## Patentansprüche

1. Verfahren zur Erstellung einer Beschreibung eines Gepäckstücks (18), bei dem
- das Gepäckstück (18) mittels einer visuellen Erfassungseinrichtung (4) erfasst wird, mittels welcher ein Gepäckstückabbild erzeugt wird,
- aus dem Gepäckstückabbild visuelle Merkmale (20) des Gepäckstücks (18) extrahiert werden und
- aus den extrahierten visuellen Merkmalen (20) des Gepäckstücks (18) eine Gepäckstückbeschreibung erstellt wird.

2. Verfahren nach Anspruch 1,
**dadurch gekennzeichnet, dass**
die visuellen Merkmale (20) des Gepäckstücks (18) ein Gepäckstückabmaß und/oder eine Gepäckstückform und/oder eine Gepäckstückfarbe und/oder eine Gepäckstückmusterung und/oder ein Gepäckstücklogo (26) und/oder einen Gepäckstückmarkennamen (28) umfassen.

3. Verfahren nach Anspruch 1 oder 2,
**dadurch gekennzeichnet, dass**
die Gepäckstückbeschreibung in Form eines Beschreibungsvektors und/oder in Form eines beschreibenden Textes erstellt wird.

4. Verfahren nach einem der vorherigen Ansprüche,
**dadurch gekennzeichnet, dass**
die visuelle Erfassungseinrichtung (4) eine Handerfassungseinrichtung, insbesondere eine Handkamera und/oder ein Handscanner, ist.

5. Verfahren nach einem der vorherigen Ansprüche,
**dadurch gekennzeichnet, dass**
ein an dem Gepäckstück (18) angeordnetes Zusatzelement (22) mittels der visuellen Erfassungseinrichtung (4) erfasst wird, mittels welcher ein Zusatzabbild erzeugt wird, wobei aus dem Zusatzabbild visuelle Merkmale (24) des Zusatzelementes (22) extrahiert werden und aus den extrahierten visuellen Merkmalen (24) des Zusatzelementes (22) eine Zusatzbeschreibung erstellt wird, die gemeinsam mit der Gepäckstückbeschreibung eine erweiterte Gepäckstückbeschreibung bildet.

6. Verfahren nach einem der vorherigen Ansprüche,
**dadurch gekennzeichnet, dass**
das Gepäckstück (18) ein Zusatzelement (22) mit einem Informationssatz (30) in Form von Klartext (30) aufweist und bei der visuellen Erfassung der Informationssatz (30) zumindest teilweise visuell erfasst wird und zumindest ein Teil des Informationssatzes (30) mittels einer optischen Texterkennung erkannt wird.

7. Verfahren nach Anspruch 6,
**dadurch gekennzeichnet, dass**
das Gepäckstück (18) unter Verwendung des erkannten Teils des Informationssatzes (30) automatisch weiterverarbeitet, insbesondere sortiert, wird.

8. Verfahren nach einem der vorherigen Ansprüche,
**dadurch gekennzeichnet, dass**
die Extraktion von visuellen Merkmalen (20, 24) unter Verwendung von Vorwissen und/oder unter Verwendung von trainierbaren Systemen erfolgt.

9. Verfahren nach einem der vorherigen Ansprüche,
**dadurch gekennzeichnet, dass**
die bei der visuellen Erfassung des Gepäckstücks (18) erstellte Gepäckstückbeschreibung als Vergleichsbeschreibung gespeichert wird, insbesondere in einer Datenbank (8, 52).

10. Verfahren nach Anspruch 9,
**dadurch gekennzeichnet, dass**
das Gepäckstück (18) ein Fluggepäckstück ist und die Vergleichsbeschreibung weiteren am Transport des Gepäckstück (18) beteiligen Flughäfen (56) zur Verfügung gestellt wird.

11. Verfahren nach einem der vorherigen Ansprüche, eingesetzt bei einer Prüfung, wobei geprüft wird, ob die Gepäckstückbeschreibung mit einer Vergleichsbeschreibung, welche insbesondere in einer Datenbank (8, 52) gespeichert ist, übereinstimmt.

12. Verfahren nach einem der vorherigen Ansprüche, eingesetzt bei einer Prüfung,
**dadurch gekennzeichnet, dass**
eine Datenbank (8, 52) mehrere Vergleichsbeschreibungen umfasst und bei der Prüfung geprüft wird, welche der Vergleichsbeschreibungen der Datenbank (8, 52) die größte Übereinstimmung mit der Gepäckstückbeschreibung aufweist.

13. Verfahren nach einem der vorherigen Ansprüche, eingesetzt zur Identifizierung eines Gepäckstücks (18).

14. Verfahren nach einem der vorherigen Ansprüche, eingesetzt zu einer Zuordnung,
wobei die Gepäckstückbeschreibung dazu genutzt wird, dem Gepäckstück (18) eine Information zuzuordnen.

15. Verfahren nach einem der vorherigen Ansprüche, eingesetzt zu einer Abbilderstellung des Gepäckstücks (18),
wobei aus der Gepäckstückbeschreibung ein Abbild des Gepäckstücks (18) erstellt wird, wobei das Abbild des Gepäckstücks (18) ein Bild des Gepäckstücks (18), eine schematische Darstellung des Gepäckstücks (18), ein 2D-Modell des Gepäckstücks (18) und/oder ein 3D-Modell des Gepäckstücks (18) ist.

16. Verfahren nach Anspruch 15, eingesetzt zum Auffinden eines vermissten Gepäckstücks (18).

17. Verfahren nach Anspruch 15 oder 16,
**dadurch gekennzeichnet, dass**
das aus der Gepäckstückbeschreibung erstellte Abbild des Gepäckstücks (18) mit einem Vergleichs-Abbild verglichen wird, welches aus einer Vergleichsbeschreibung erstellt wird.

18. Verfahren nach einem der vorherigen Ansprüche, eingesetzt bei einer Gepäckstücküberprüfung,
wobei geprüft wird, ob sich ein Aussehen des Gepäckstück (18) verändert hat, insbesondere ob das Gepäckstück (18) beschädigt wurde.

19. Verfahren nach einem der vorherigen Ansprüche, eingesetzt bei einer Vielzahl von Gepäckstücken (18), wobei für jedes der Gepäckstücke (18) eine Gepäckstückbeschreibung erstellt wird.

20. Verfahren nach Anspruch 19, eingesetzt zur statistischen Auswertung von visuellen Merkmalen (20) von Gepäckstücken (18), bei dem
zumindest ein Teil der erfassten visuellen Merkmale (20) der Gepäckstücke (18) statistisch ausgewertet werden.

21. Gepäckbeschreibungssystem (2) mit einer visuellen Erfassungseinrichtung (4) und einer Datenverarbeitungseinheit (6) zur Ausführung eines Verfahrens nach einem der vorhergehenden Ansprüche.
